(19) Europäisches Patentamt
European Patent Office
Office européen des brevets

(11) Publication number: **0 192 630 B1**

# (12) EUROPEAN PATENT SPECIFICATION

(45) Date of publication of patent specification: **13.03.91**

(51) Int. Cl.5: **C11D 3/36**, C11D 3/12, C02F 5/14

(21) Application number: **86870025.3**

(22) Date of filing: **21.02.86**

## (54) Aminomethylenephosphonate compositions.

(30) Priority: **21.02.85 GB 8504489**

(43) Date of publication of application:
**27.08.86 Bulletin 86/35**

(45) Publication of the grant of the patent:
**13.03.91 Bulletin 91/11**

(84) Designated Contracting States:
**BE DE FR GB IT LU NL**

(56) References cited:
**EP-A- 0 026 529**
**EP-A- 0 114 483**
**EP-A- 0 168 373**
**FR-A- 2 287 504**

(73) Proprietor: **MONSANTO EUROPE S.A.**
**Avenue de Tervuren 270-272 Letter Box 1**
**B-1150 Brussels(BE)**

(72) Inventor: **May, Bronislav Henri**
**Courtensdreef 5**
**B-1900 Overijse(BE)**
Inventor: **Nijs, Hubert Hendrik**
**Heilige Geeststraat 120**
**B-3000 Leuven(BE)**
Inventor: **Vandenbulcke, Brigitte Marie Judith**
**8 rue Pont des Brebis**
**B-5890 Chaumont-Gistoux(BE)**

(74) Representative: **Lunt, John Cooper et al**
**Monsanto Europe S.A. Patent Department**
**Avenue de Tervuren 270-272 Letter Box No 1**
**B-1150 Brussels(BE)**

**EP 0 192 630 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to stabilised aminomethylenephosphonate compositions in the form of powder or granules.

Various aminomethylenephosphonic acids and their water-soluble salts are known materials having a variety of uses including stabilisation of peroxygen compounds and inhibition of scale in water-treatment processes.

Certain of the aminomethylenephosphonic acids are stable solids, but for many applications, their alkali metal salts (in which some or all of the acidic hydrogen atoms of the phosphonic acid are replaced by alkali metal ions), are more suitable. Such alkali metal salts are not, in isolation, stable solids, being highly hygroscopic or deliquescent, and they are therefore sold as aqueous solutions. For certain uses, e.g. as components of detergent compositions, a powder or granular form of such salts would be advantageous. Such a form is provided by the present invention. The aminomethylenephosphonates are generally adversely affected by an oxidising environment, so that the presence in the compositions of the invention of materials which tends to generate such an environment is undesirable.

A composition of the invention comprises, in powder or granular form, a mixture of (a) at least one alkali metal aminomethylenephosphonate of the formula

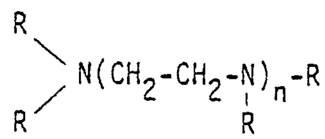

where each R is H, $CH_2PO_3H_2$ or $CH_2PO_3HM$ or $CH_2PO_3M_2$ where M is an alkali metal, but more than half, or an average of more half, of the R groups represent $CH_2PO_3HM$ or $CH_2PO_3M_2$, and n is 0 or an integer, preferably an integer of from 1 to 4, and (b) a water-insoluble support which is a silicate or aluminosilicate having a layered sheet structure, the compositions being substantially free of peroxygen compounds and peroxy compound precursors, characterised in that the proportions by dry weight of (a) to (b) are within the range 1:0.15 to 1:10.

Preferred aminomethylenephosphonates for use in the compositions of the present invention are the alkali metal salts, especially sodium salts, of ethylenediaminetetra(methylenephosphonic acid) and of diethylenetriaminepenta(methylenephosphonic acid), and mixtures thereof. The alkali metal salts can be made from the corresponding acids by neutralisation or partial neutralisation with alkali metal hydroxides. The commercially available aminomethylenephosphonic acids are usually mixtures having different numbers of (methylenephosphonic acid) groups. Thus the major components of sodium salts prepared from a commercial ethylenediaminepoly(methylenephosphonic acid) are compounds in which the four R groups in the above formula are all $-CH_2PO_3Na_2$ or $CH_2PO_3HNa$, but the compounds in which three or two R groups are $-CH_2PO_3Na_2$ or $CH_2PO_3HNa$, the other(s) being hydrogen or (as an impurity) $-CH_3$, are also present. Preferably at least 80% of the R groups in the mixture are $-CH_2PO_3Na_2$ or $CH_2PO_3HNa$ groups. Similarly, in the diethylenetriamine derivatives, the penta(methylenephosphonate) usually accounts for from 60 to 80% of the total weight of the derivative, the remainder being mostly the tri(methylenephosphonate) with a small amount of the tetra(methylenephosphonate). Preferably at least 65% of the R groups in the mixture are $-CH_2PO_3Na$ or $CH_2PO_3HNa$ groups.

The water-soluble silicate or aluminosilicate is preferably a clay, especially clay of the smectite or kaolinite type. The former alkali and alkaline earth metal montmorillonites, saponites and hectorites, and the latter include kaolinite itself, calcined kaolin and metakaolin.

The water-insoluble silicate or aluminosilicate preferably has an original average particle size within the range 0.5 to 50 micrometres, but in the compositions of the invention, the particles are largely agglomerated. The compositions of the invention preferably contain no particles smaller than 50 micrometres or larger than 600 micrometeres; a preferred minimum mean particle size is 150 micrometres, with the optimum mean being in the range 400-500 micrometres.

The proportions on a dry weight weight basis of components (a) and (b) in the compositions of the invention can, for example, range from 1:0.5 to 1:10, for instance from 1:1 to 1:10, a preferred range being from 1:1 to 1:4, for example from 1:1.5 to 1:4. It has been observed that the storage stability of the product improves as the ratio of clay to phosphonate increases, up to a certain ratio beyond which no significant further improvement occurs. This maximum effect ratio varies according to the particular clay being used, but is often found to be between 1:2 and 1:3.

The compositions of the invention may contain additional ingredients, provided that such ingredients

have no adverse effects on the use for which the compositions are intended. A principal use envisaged for the compositions of the invention is as components of detergent formulations. If desired, therefore, other ingedients conventionally included in such formulations (other than peroxygen compounds and peroxy compound precursors as indicated above) can be present in the compositions of the invention. These optional other ingredients include surfactants, particularly anionic and nonionic surfactants. Various inorganic alkali metal salts, for example carbonates, borates, phosphates, polyphosphates, metaphosphates and sulphates, oganic builders, for example nitrilotriacetates and polycarboxylates, and thickeners, for example, carboxymethylcellulose can also be present. The total amount of any such additional ingredients is preferably not greater than twice the amount of the silicate or aluminosilicate component.

The compositions of the inventions are usually prepared by spray-drying a slurry of the components at a conventional spray-drying temperature, for example within the range 200-350 °C, with conditions adjusted to give the required particle size and moisture content. The latter is desirably as low as possible. The moisture content tends to increase slowly on storage, so that typically a commercial composition may have a moisture content within the range 5-10 percent by weight.

Examples

Compositions of the invention were prepared by forming a slurry from the components shown below with, if necessary, sufficient water to give approximately 55% by weight of solids in the slurry. The slurry was then spray dried.

China clay is described as a water-washed product, prepared from hydrothermally modified granite found in south-west England. It is mainly a hydrated aluminium silicate with the approximate formula $Al_2O_3$, $2SiO_2$, $2H_2O$, and mineralogically it is composed of kaolinite with minor amounts of micaceous minerals, felspar and quartz. Westone® and Bentonite® A.S. are smectite clays supplied by English China Clays.

Example 1

| | Weight Parts |
|---|---|
| Sodium salt of ethylenediaminetetra(methylene phosphonic acid), mainly the pentasodium salt. 33% by weight aqueous solution | 27 |
| Sodium salt of diethylenetriaminepenta (methylenephosphonic acid), mainly the heptasodium salt. Approx. 33% by weight aqueous solution. | 54 |
| China clay. 70% by weight slurry in water. | 59 |
| Anhydrous sodium sulphate. | 20 |

The spray-dried product contained the mixture of sodium aminomethylenephosphonates, clay and sodium sulphate in the approximate proportions by weight 1.3:2:1.

Example 2

| | Weight Parts |
|---|---|
| Sodium salt of ethylenediaminetetra (methylenephosphonic acid), mainly the pentasodium salt. 33% weight aqueous solution. | 81 |
| China clay. 70% by weight aqueous slurry. | 59 |
| Anhydrous sodium sulphate. | 20 |

The spray-dried product contained the sodium aminomethylenephosphonate, clay and sodium sulphate in the approximate proportions by weight 1.3:2:1.

Example 3

| | Weight Parts |
|---|---|
| Sodium salt of diethylenetriaminepenta (methylenephosphonic acid), mainly the heptasodium salt. Approx. 25% by weight aqueous solution. | 81 |
| China clay. 70% by weight aqueous slurry. | 59 |
| Anhydrous sodium sulphate. | 20 |

The spray-dried product contained the sodium aminomethylenephosphonate, clay and sodium sulphate in the approximate proportions by weight 1:3:2.1.

Example 4

In four separate preparations, 12.5 g, 25 g, 50 g and 75 g respectively of Bentonite® A.S. were added to 100 g of a 33% by weight aqueous solution of the sodium salt of ethylenediamine tetra-(methylenephosphonic acid), mainly with pentasodium salt.

Each solution was diluted with distilled water to a total volume of 400 ml before spray drying. The samples obtained by spray drying had weight ratios of phosphonate (expressed as the equivalent of active acid) to clay of 1:0.5, 1:1, 1:2 and 1:3 respectively. One part by weight of the sodium salt of ethylenediamine tetra(methylenephosphonic acid) is equivalent to approximately 0.65 parts by weight of active ethylenediaminetetra(methylenephosphonic acid).

A detergent formulation having the following composition was prepared.

| Ingredient | % by weight |
|---|---|
| Sodium tripolyphosphate | 20 |
| Sodium perborate tetrahydrate | 20 |
| Tetraacetylethylenediamine | 2 |
| IEC detergent base (1976 formulation) | Quant. suff. |

To samples of the above formulation, there was added sufficient of the spray-dried clay/phosphonate compositions described above to provide 1% by weight, based on the total weight of the detergent formulation, of sodium ethylenediaminetetra(methylenephosphonate) expressed as the equivalent active acid.

To investigate the stability of the formulations thus prepared, samples were placed in 100 ml open jars and stored for 60 hours at 40°C and 80% relative humidity. The samples were then analysed for residual ethylenediaminetetra(methylenephosphonate) using an ion chromatography technique. As control, a formulation containing spray-dried sodium ethylenediaminetetra(methylenephosphonate) without clay, was employed.

The following results were obtained. Residual phosphonate is expressed as a percentage of the phosphonate originally present before storage.

| Phosphonate/Clay Ratio | Residual Phosphonate |
|---|---|
| 1:0.5 | 35 |
| 1:1 | 45 |
| 1:2 | 80 |
| 1:3 | 80 |
| Control | 7 |

The beneficial effect of the clay in stabilising the phosphonate is apparent.

Example 5

Stability tests were carried out on detergent formulations as described in Example 4 with spray-dried compositions containing sodium ethylenediaminetetra(methylenephosphonate) and clay in a weight ratio (the phosphonate being expressed as the equivalent of active acid) of 1:2. The samples were stored overnight at 50°C and 80% relative humidity.
The following results were obtained

| Clay | % Residual Phosphonate |
|---|---|
| None | 0 |
| Westone® (Smectite) | 60 |
| Bentonite® A.S. (Smectite) | 75 |
| Kaolinite 1 | 80 |
| Kaolinite 2 | 70 |

The beneficial effect of the clay in stabilising the phosphonate is apparent.

## Claims

1. A powder or granular composition (a) at least one alkali metal aminomethylenephosphonate of the formula

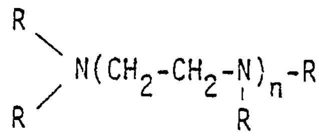

where each R is H, $CH_2PO_3H_2$ or $CH_2PO_3HM$ or $CH_2PO_3M_2$ where M is an alkali metal, but more than half, or an average of more half, of the R groups represent $CH_2PO_3HM$ or $CH_2PO_3M_2$, and n is 0 or an integer, preferably an integer of from 1 to 4, and (b) a water-insoluble support which is a silicate or aluminosilicate having a layered sheet structure, the composition being substantially free of peroxygen compounds and peroxy compound precursors, characterised in that the proportions by dry weight of (a) to (b) are withthe range 1:0.5 to 1:10.

2. A composition according to Claim 1 in which the alkali metal aminomethylenephosphonate is a sodium salt of ethylenediaminetetra (methylenephosphonic acid), a sodium salt ofdiethylenetriaminepenta (methylenephosphonic acid) or a mixture thereof.

3. A composition according to either of Claims 1 and 2 in which the water-insoluble support is a kaolinite or smectite clay.

4. A composition according to any of Claims 1 to 3 in which the proportion by dry weight of the alkali metal aminomethylenephosphonate to the water-insoluble support is in the range 1:1 to 1:4.

5. A composition according to Claim 4 in which the proportion by dry weight of the alkali metal aminomethylenephosphonate to the water-insoluble support is in the range 1:1.5 to 1:4.

6. A composition according to any of Claims 1 to 5 having substantially no particles smaller than 50 micrometres or larger than 600 micrometres and a mean particle size of at least 150 micrometres.

7. A composition according to any of Claims 1 to 6 which contains an inorganic alkali metal salt as a further component.

8. A composition according to Claim 7 in which the inorganic metal salt is sodium sulphate.

9. A process for the production of a composition as defined in Claim 1, which comprises forming a slurry of the water-insoluble support (a)in an aqueous solution of the alkali metal aminomethylenephosphonate(s) (b), so that the proportions by dry weight of (a) to (b) are within the range 1:0.5 to 1:10, and spray drying the slurry.

## Revendications

1. Composition en poudre ou granulaire comprenant (a) au moins un aminométhylènephosphate de métal alcalin de formule

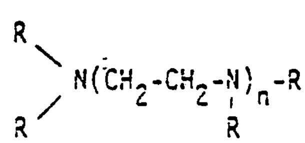

dans laquelle chaque R est H, $CH_2PO_3H_2$ ou $CH_2PO_3HM$ ou $CH_2PO_3M_2$, où M est un métal alcalin, mais plus de la moitié, ou une moyenne de plus de la moitié, des groupes R représentent $CH_2PO_3HM$

ou $CH_2P0_3M_2$, et n est nul ou un nombre entier, de préférence un nombre entier de 1 à 4, et (b) un support insoluble dans l'eau qui est un silicate ou un aluminosilicate ayant une structure à feuillets, la composition étant essentiellement exempte de composés peroxygénés et de précurseurs de composés peroxygénés, caractérisée en ce que les proportions en poids sec de (a) à (b) sont dans l'intervalle de 1:0,5 à 1:10.

2. Composition selon la revendication 1, dans laquelle l'aminométhylènephosphonate de métal alcalin est un sel de sodium d'acide éthylènediaminetétraméthylènephosphonique, un sel de sodium d'acide diéthylènetriaminepentaméthylènephosphonique ou un mélange de ceux-ci.

3. Composition selon l'une quelconque des revendications 1 et 2, dans laquelle le support insoluble dans l'eau est une argile kaolinite ou smectite.

4. Composition selon l'une quelconque des revendications 1 à 3, dans laquelle la proportion en poids sec de l'aminométhylènephosphonate de métal alcalin au support insoluble dans l'eau est dans l'intervalle de 1:1 à 1:4.

5. Composition selon la revendication 4, dans laquelle la proportion en poids sec de l'aminométhylènephosphonate de métal alcalin au support insoluble dans l'eau est dans l'intervalle de 1:1,5 à 1:4.

6. Composition selon l'une quelconque des revendications 1 à 5, ne comportant pratiquement pas de particules de taille inférieure à 50 micromètres ou supérieure à 600 micromètres et ayant une granulométrie moyenne d'au moins 150 micromètres.

7. Composition selon l'une quelconque des revendications 1 à 6, qui contient un sel minéral de métal alcalin comme autre constituant.

8. Composition selon la revendication 7, dans laquelle le sel métallique minéral est le sulfate de sodium.

9. Procédé de production d'une composition telle que définie dans la revendication 1, qui comprend la formation d'une suspension du support insoluble dans l'eau (a) dans une solution aqueuse du ou des aminométhylènephosphonate(s) de métal alcalin (b), de telle sorte que les proportions en poids sec de (a) à (b) soient dans l'intervalle de 1:0,5 à 1:10, et le séchage par atomisation de la suspension.

## Ansprüche

1. Pulverförmige oder granulierte Zubereitung enthaltend (a) mindestens ein Alkalimetall-aminomethylenphosphonat der Formel

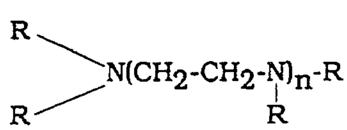

worin R jeweils H, $CH_2P0_3H_2$ oder $CH_2PO_3HM$ oder $CH_2P0_3M_2$, worin M ein Alkalimetall derstellt, bedeuten, wobei mehr als die Hälfte oder im Durchschnitt mehr als die Hälfte der Gruppen R Gruppen der Formeln $CH_2P0_3HM$ oder $CH_2PO_3M_2$ sind und n 0 oder eine ganze Zahl, vorzugsweise eine ganze Zahl von 1 bis 4, bedeuten, und (b)einen wasserunlöslichen der, Träger, welcher ein Silikat oder Aluminosilikat mit geschichteter Blattstruktur ist, welche Zubereitung im wesentlichen frei von Peroxidverbindungen und Peroxidverbindungsvorläufern ist, dadurch gekennzeichnet, daß das Trockengewichtsverhältnis von (a) zu (b) im Bereich von 1: 0,5 bis 1: 10 liegt.

2. Zubereitung nach Anspruch 1, worin das Alkalimetall-aminomethylenphosphonat ein Natriumsalz von Ethylendiamintetra-[methylenphosphonsäure), ein Natriumsalz von Diethylentriaminpenta-(methylenphosphonsäure) oder eine Mischung davon ist.

3. Zubereitung nach einem der Ansprüche 1 und 2, worin der wasserunlösliche Träger ein Kaolinit- oder Smektit-Ton ist.

4. Zubereitung nach einem der Ansprüche 1 bis 3, worin das Trockengewichtsverhältnis von Alkalimetall-aminomethylenphosphonat zu wasserunlöslichem träger im Breich von 1: 1 bis 1: 4 liegt.

5. Zubereitung nach Anspruch 4, worin das Trockengewichtsverhältnis von Alkalimetall-aminomethylenphosphonat zu wasserunlöslichem Träger im Bereich von 1:1,5 bis 1 :4 liegt.

6. Zubereitung nach einem der Ansprüche 1 bis 5 enthaltend im wesentlichen keine Teilchen Kleiner als 50 µm oder größer als 600 µm und enthaltend Teilchen mit einer durchschnittlichen Teilchengröße von mindestens 150 µm.

7. Zubereitung nach einem der Ansprüche 1 bis 6 enthaltend ein anorganisches Alkalimetallsalz als zusätzlichen Bestandteil.

8. Zubereitung nach Ansprüch 7, worin das anorganische Metallsalz Natriumsulfat ist.

9. Verfahren zur Herstellung einer Zubereitung nach Anspruch 1, welches darin besteht, eine Aufschlämmung des wasserunlöslichen Trägers (a) in einer wäßrigen Lösung des (der) Alkaltmetallaminomethylenphosphonate(s) (b)derart, daß das Gewichtsverhältnis von (a) zu (b) im Bereich von 1 : 0,5 bis 1: 10 liegt, bildet und die Aufschlämmung sprühtrocknet.